# EUROPEAN PATENT APPLICATION

(11) **EP 1 138 418 A2**
(43) Date of publication of application: **04.10.2001**
(21) Application number: 01103468.3
(22) Date of filing: 14.02.2001
(51) Int. Cl.: B22D 19/00, B22D 19/14, B22D 27/13, B22F 3/11, B22F 5/02

(54) **Metal porous preform and manufacturing process for metal composite member using the preform**

(30) Priority: 30.03.2000 JP 2000093965
(71) Applicant: Mazda Motor Corporation, Aki-gun, Hiroshima 730-8670 (JP)
(72) Inventor: Oda, Nobuyuki, c/o Mazda Motor Corporation, Aki-gun, Hiroshima 730-8670 (JP)
(74) Representative: Müller-Boré & Partner Patentanwälte

(57) **Abstract**

Provided are a Fe-based metal porous preform (7, M) capable of ensuring sufficient adhesiveness between a molten metal and a base material thereof even when a casting process having a time lag from completion of pouring of the molten metal till pressure impregnation is applied; and a manufacturing process for a metal composite member (1) using such a preform (7, M). The Fe-based metal porous preform (7, M) is a metal porous preform (7, M) adopted in a casting process having a prescribed time lag from completion of pouring of a molten metal till impregnation of the molten metal when the metal porous preform (7, M) set inside a mold (11) is impregnated with the molten metal, and characterized by that the metal porous preform (7, M) is made from an iron-based metal as a base material, including chromium in the range of 10 to 40 wt % as a content.

## Description

### BACKGROUND OF THE INVENTION

### Field of the Invention

The present invention relates to a porous preform made from metal and a manufacturing process for a metal composite member using such a preform as a composite forming material.

### Description of the Related Art

As has been well known, a light alloy such as aluminum alloy is often used in automotive engine parts and others because of light weight and good thermal conductivity, but has week points such as poor heat resistance and low wear resistance as compared with an iron-base material such as cast iron and steel. Hence, for example, in a case of an engine piston for use in a diesel engine, a method or a technique has been developed of forming a composite reinforcement section in the periphery of a top ring groove using a metal porous material such as made from nickel in order to reinforce the top ring groove which requires higher wear resistivity than the other sections of the piston (see Japanese Patent Publication No. HEI 2-30790 which corresponds to U.S. Patent No. 4,966,221).

As a process for forming such a composite reinforcement section, a so-called high-pressure casting process was generally employed in the prior art for the purpose to impregnate molten aluminum alloy into pores of a preform constituted of a metal porous material.

This high-pressure casting process proceeds like this:
a preform made of a reinforcement material having a prescribed porosity is set inside a mold cavity, molten aluminum alloy is poured into the mold cavity and thereafter, a high pressure is applied on the molten aluminum alloy, for example, at the order of 29.4 to 147 MPa by mechanical means such as a pressure punch or a plunger and the pressure is kept in the state till full solidification of the molten aluminum alloy.

In this high-pressure casting process, however, problems have been present in the actual use since a high pressure is employed in forming a composite, which are:
1. since a pressurizing mechanism and a strong mold clamping mechanism for applying a high pressure are required, the casting facility becomes to be large in scale and highly expensive;
2. since a molten metal is apt to be infiltrated into a core at least partially and the core itself is apt to be deformed or broken by applying a high pressure, it is required to ensure a sufficient strength of the core and particularly, there is difficulty in actual use of a disintegrable core (for example, a salt core and a sand core) for this case; and
3. since a metal mold itself is necessary to endure a high pressure and a mold construction also has many constraints, a freedom in shape of a product is low, in other words this process is not suited for manufacture of a product of a complex shape or a large size.

Therefore, the applicant of the present application has proposed a process and apparatus for manufacturing a light alloy composite material which includes a so-called gas pressure casting process as a technical base constituted by using pressure means whose medium is a gas in a normal, metal mold gravity casting process so as to be able to form a composite reinforcement section (for example, see Japanese Patent Laid-Open Publication No. HEI 9-122887 which corresponds to U.S. Patent No. 6,035,923).

In a case of this gas pressure casting process, the process proceeds this way: a composite forming material including pores is held inside a mold cavity; a molten metal of a light alloy is poured into the mold cavity; thereafter, a sprue of the mold is closed; in that state, the molten metal in the'mold cavity is pressurized by a gas in order to fill the pores of the composite forming material with the molten metal, with the result that a composite section in which the light alloy and the composite forming material are included is formed. Hence, no large scale, expensive casting facilities as were used in a prior art high pressure casting process are necessary, which makes it possible to solve the problems as shown in items 1 to 3 above.

In the mean time, it is most general that a metal porous preform for use in forming a composite reinforcement section is obtained such that electroplating is applied on foamed resin and thereafter, the resin foam is eliminated to leave a porous core. A main stream of metal porous preforms obtained by means of such a manufacturing process is one manufactured using nickel (Ni) or an alloy thereof which can be electroplated with ease as a base thereof, since electroplating is adopted in the process.

Hence, such a metal porous material is more expensive as a reinforcement material in comparison with that made of cast iron and thus obtained composite material is poor in machinability, which leads to complexity in processing for obtaining a preform, thereby resulting in a problem of increased manufacturing cost.

It has been conceived in regard to such a preform material that instead of the Ni-based porous material, a iron (Fe)-based porous material low in cost and excellent in machinability is used (for example, see Japanese Patent Publication No. HEI 6-45830 which corresponds to U.S. Patent No. 5,028,493).

In a case where this Fe-based porous material is employed, however, the material thereof itself is oxidized with ease; therefore, a problem arises since the gas pressure casting process is hard to be applied to the Fe-based porous material. That is, this gas pressure casting process is a composite forming process based on a metal mold gravity casting process, having been generally used, as a base and to be detailed, after molten metal pouring is completed, a sprue is closed and subsequent to this, the molten metal is pressurized by a gas of a relatively low pressure; therefore, there exists an inevitable time lag (normally, of the order of 5 to 10 seconds) from the completion of molten metal pouring into the mold till impregnation into the porous material under the pressure. For this reason, the reinforcement material is forcibly exposed to the atmospheric air for a time in a high temperature condition produced by the molten metal (for example, in the range of 700 to 750°C in a case where a molten aluminum-based alloy is poured) prior to the impregnation under the pressure.

That is, a surface of the framework of a Fe-based reinforcement material is forcibly exposed to the atmospheric air at high temperature for a time corresponding to the time lag from the pouring of the molten metal till the pressure impregnation and thereby, oxidized, which impairs adhesiveness between the molten metal (that is a casting material) and a base of the reinforcement material. Hence, a problem arises since wear resistance of the reinforcement material after the impregnation decreases, which makes it impossible to obtain a prescribed wear resistance and prescribed strength characteristics.

It is to be noted that in a case of a prior art high pressure casting process, a process from completion of molten metal pouring till pressurization of the molten metal is performed in consecutive steps and furthermore, a pressure is very high; therefore, no time lag as experienced in the gas pressure casting process occurs.

### SUMMARY OF THE INVENTION

The present invention has been made to resolve the above described technical problems and it is accordingly an object of the present invention to provide a Fe-based metal porous preform capable of ensuring sufficient adhesiveness between a molten metal and a base thereof even when a casting process having a time lag from completion of pouring of the molten metal till pressure impregnation is applied; and a manufacturing process for a metal composite member using such a preform.

Thus, in a first aspect of the present invention, there is provided a metal porous preform adopted in a casting process having a prescribed time lag from completion of pouring of a molten metal till impregnation of the molten metal when the metal porous preform set inside a mold is impregnated with the molten metal, wherein the metal porous preform is made from iron or an iron-based metal as a base material, including chromium.

According to the first aspect of the present invention, since a base material of a metal porous preform is iron or a Fe-based metal, the preform is low in cost. And, it is prevented by the addition of chromium that the preform is oxidized by a time lag from the completion of molten metal pouring till the molten metal impregnation, while facilitating formability. That is, it is possible that not only are reduction in material cost and improvement of formability achieved, but also adhesiveness between a casting material and a preform in a composite reinforcement section is ensured, and a desired wear resistance is attained.

Furthermore, in the first aspect of the present invention, a chromium content is preferably in the range of 10 to 40 wt %.

The reason why the lower limit of a chromium content is set to be 10 wt % is that a heat resistance (oxidation resistance) of the order of about 700°C is required for the preform during a casting process, in other words, in order to ensure a wear resistance equal to or higher than a prior art metal porous preform prepared by electroplating on nickel (Ni) base, and to satisfy this requirement, a chromium content of 10 wt % or higher is necessary.

On the other hand, the reason why the upper limit of a chromium content is set to 40 wt % is that when a chromium content exceeds this value, a δ phase as an intermetallic compound is precipitated in the material structure of the metal porous preform to make it fragile and thereby, it is difficult to ensure wear resistance thereof at a desired level.

By setting a Cr content in the range of 10 to 40 wt %, there can be ensured a wear resistance equal to or higher than a preform prepared by means of an electroplating on a nickel (Ni) base having been generally adopted in the prior art.

Furthermore, in a second aspect of the present invention, there is provided a manufacturing process for a metal composite member including a casting process having a prescribed time lag from completion of pouring of a molten metal till impregnation of the molten metal when a metal porous preform set inside a mold is impregnated with the molten metal, comprising the steps of: forming the metal porous preform, made from iron or an iron-based metal as a base material, and including chromium; setting the metal porous preform inside a mold at a prescribed position; and thereafter, pouring the molten metal into the mold to impregnate the metal porous preform with the molten metal under pressure, whereby a composite section is formed in which a casting material and the preform are included.

According to the second aspect of the present invention, since a base of a metal porous preform as a composite forming material is iron or a Fe-based metal, the preform is low in cost. And, it is prevented by the addition of chromium that the preform is oxidized by a time lag from the completion of molten metal pouring till the molten metal impregnation, while facilitating formability. That is, it is possible that not only are reduction in material cost and improvement of formability achieved, but adhesiveness between a casting material and a preform in a composite reinforcement section is ensured, and a desired wear resistance is attained.

Furthermore, in the second aspect of the present invention, it is preferable that the pores in the preform are filled with the molten metal by pressurizing the molten metal in the mold with a gas pressure after pouring of the molten metal is completed and a sprue of the mold is closed, in the casting process.

In this case, particularly the casting process is a so-called gas pressure casting process in which the sprue is closed after molten metal pouring is completed, the molten metal in the mold is pressurized by a gas pressure and thereby, pores (or cells) in the preform is filled with the molten metal; therefore, the problems in a prior art high pressure casting process can be avoided and in addition to this, pores (cell) in a preform can be filled with the molten metal simply and surely under a low pressure.

Still furthermore, in the second aspect of the present invention, it is preferable that the metal porous preform is manufactured by means of a sintering process.

In this case, since the metal porous preform is manufactured by means of the sintering process, a preform can be simply molded as compared with an electroplating process having been generally adopted in the prior art.

Yet furthermore, in the second aspect of the present invention, it is preferable that addition of chromium is performed by means of a chromizing treatment.

In this case, since addition of chromium to the metal porous preform is performed by means of a chromizing treatment, chromium diffusion into a base (iron or a iron-based metal) can be performed with simplicity and ease.

### BRIEF DESCRIPTION OF THE DRAWINGS

Fig. 1 is a front view showing an aluminum alloy piston including a view of a partial section thereof relating to an embodiment of the present invention;
Fig. 2 is a perspective view of a composite forming material core ring for partial reinforcement of the piston;
Fig. 3 is a sectional view schematically showing the entire casting apparatus used in casting of the piston;
Fig. 4 is a sectional view schematically showing an example of a mold of the casting apparatus;
Fig. 5 is a sectional view taken along line V-V of Fig. 4;
Fig. 6 is a sectional view schematically showing another example of the mold used in casting the piston;
Fig. 7 is a sectional view of a main part of an aluminum alloy cast body (piston) cast in the casting apparatus;
Fig. 8 is a graph showing a relationship of a specific gravity of a composite section with an applied pressure;
Fig. 9 is a graph showing a relationship between a volume ratio of a composite forming material and an applied pressure required for impregnation of the composite forming material with a molten metal;
Figs. 10A to 10E are pictorial representations of a series of steps of a manufacturing process for a preform relating to the embodiment of the present invention;
Fig. 11 is a descriptive view schematically showing a construction of a tester performing a wear test for a composite member relating to the embodiment; and
Fig. 12 is a graph showing test results of the wear test.

### DESCRIPTION OF THE PREFERRED EMBODIMENTS

Description will be given of an embodiment of the present invention in regard to a case where, for example, an automotive engine piston having a composite reinforcement section in the periphery of a top ring groove is cast below with reference to the accompanying drawings.

Description is started with a manufacturing process for a piston (a composite member) using a porous preform of a prescribed porosity made from a metal relating to the embodiment as a partial reinforcement material for composite formation.

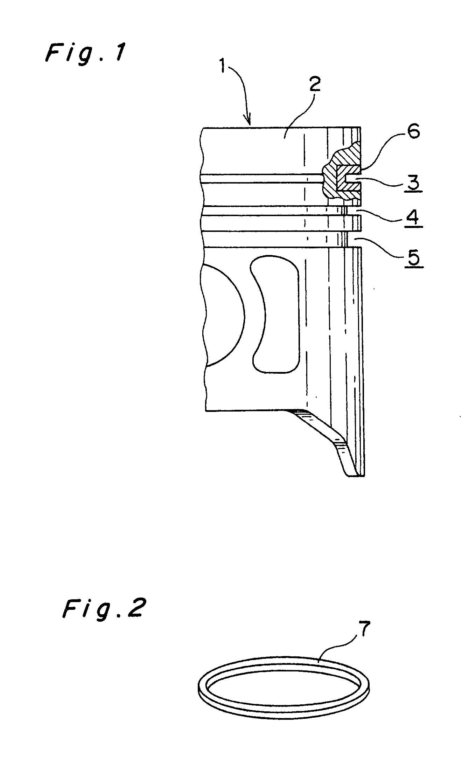

Fig. 1 shows an aluminum alloy piston 1 obtained by means of a manufacturing process relating to the embodiment. On the outside surface of the piston main body 2, formed are a top ring groove 3 in which a top ring is fittingly inserted; a secondary ring groove 4 in which a secondary ring is fittingly inserted; and an oil ring groove 5 in which an oil ring is fittingly inserted.

The top ring groove 3 of the piston 1 is provided on a ring composite section 6 prepared by means of a process described later and the piston main body 2 other than the composite section 6 is constituted of an aluminum alloy.

In manufacture of the piston 1, first formed is a composite forming material ring 7 having the sectional shape of a rectangle as shown in Fig. 2, by means of materials and a manufacturing process described later. In this case, the top ring groove 3 is finished in after-machining into a final shape; therefore, the composite forming material ring is simply shaped as a ring without precise shape. After the ring 7 is placed at a position in a mold corresponding to the top ring groove 3 and the mold is clamped, a molten aluminum alloy is poured into the mold to perform casting, and, thereafter, followed by machining of the top ring groove 3.

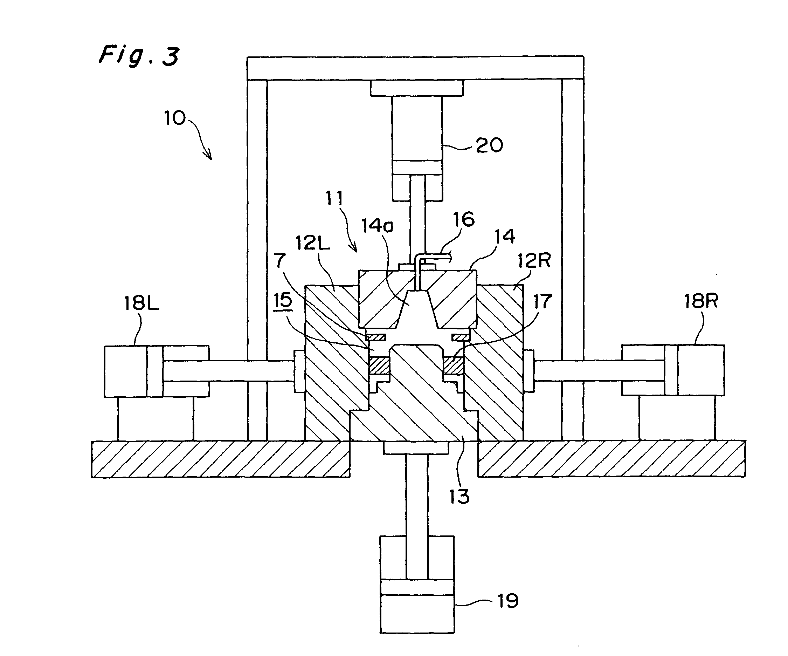

Fig. 3 is a descriptive, sectional view schematically showing a casting apparatus used in manufacture of an automotive engine piston, for example used in a diesel engine.

In the casting apparatus 10, a mold 11 is constructed by outer mold pieces 12L and 12R constitute a split mold to be disassembled to the right and left sides, a middle mold piece 13 placed downward and a top mold piece 14 disposed upward with a feeder section 14a. And, a product section cavity 15 is formed in the inside of the mold 11. The composite core ring 7 is sustained inside the mold 11 and a pipe 16 is connected to the feeder section 14a of the top mold piece 14, the pipe 16 being used for pressure application with air as a working fluid therethrough. A numerical symbol 17 indicates a pin for a hole as cast forming a piston pin insert hole.

Furthermore, the outer mold pieces 12L and 12R and the middle mold piece 13 are driven by outer mold piece cylinders 18L and 18R, and a middle mold piece cylinder 19, respectively, and besides, the top mold piece 14 is driven by a top mold piece cylinder 20.

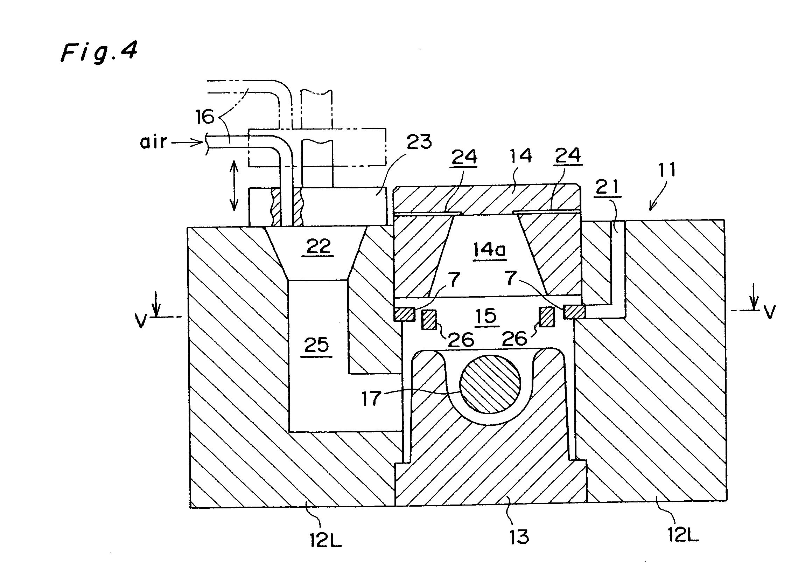

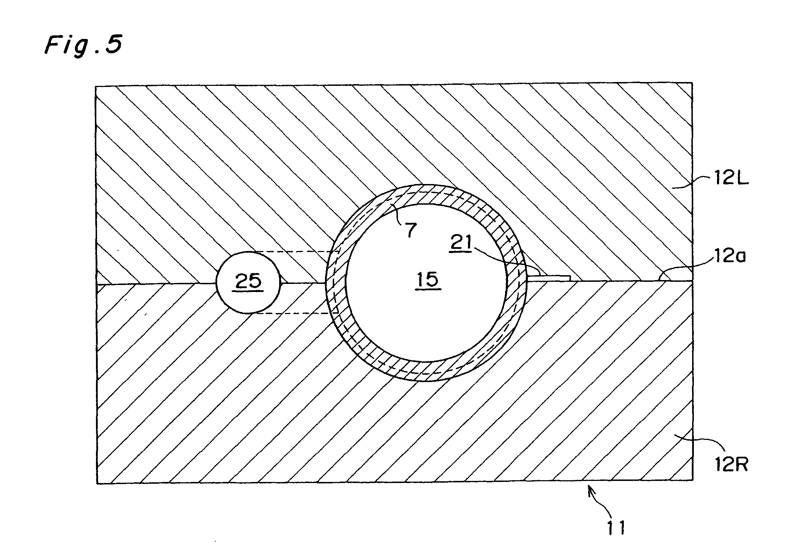

Fig. 4 is a descriptive, sectional view of the mold 11 when a pressure is applied by air through the sprue thereof and Fig. 5 shows a descriptive, sectional view (partly omitted) taken along line V-V of Fig. 4. It is to be noted that the section of Fig. 4 is perpendicular to the section of Fig. 3.

In the embodiment, an air vent (open in the atmospheric air) 21 is formed in one of the outer mold pieces 12L and 12R, for example in the outer mold piece 12L. The air vent 21 is located at the interface 12a between both mold pieces 12L and 12R, and communicating with a section at which the composite forming material core ring 7 is sustained inside the mold 11. The air vent 21 is formed as a groove, for example, with a section of about 5 to 10 mm in width and about 0.2 mm in thickness. And, a pipe 13 for performing of a pressurizing by air as a working gas is mounted to a cover 23 covering the sprue 22. In a case of this mold 11, the top mold piece 14 is again a split type to be disassembled into upper and lower portions and an air vent groove 24 (open in the atmospheric air) is formed at the interface between the upper and lower portions. The air vent groove 24 is used to discharge a air in the cavity in charging a molten metal up to the feeder section Note that a numerical symbol 25 indicates a runner leading to the product section cavity 15 starting from the sprue 22 and furthermore, a numerical symbol 26 is a salt core sustained by a support, not shown, for forming a cooling oil passage in the piston.

In the above described construction, a molten aluminum alloy (AC8A) is poured through the sprue 22 and the runner 25 into the cavity 15, thereafter, the cover 23 is lowered to close the sprue 22 airtight. And, simultaneously to this, a compressed air having a pressure of, for example, 0.49 MPa is supplied through the pipe 16 mounted to the cover 23 to pressurize the molten metal for about 50 sec to 1 min. During application of a pressure by the air, part of the molten metal intrudes into the grooves 21 and 24 partially and is cooled and solidified to seal the grooves 21 and 24. The part of the molten metal solidified in the grooves 21 and 24 is removed as flashes in company with splitting of the mold. It is to be noted that, although the application of a pressure by the air has to start within 10 to 30 sec after pouring of the molten metal, this time length, generally speaking, has only to be set in a time period during a pressure can be effectively applied prior to solidification of the molten metal.

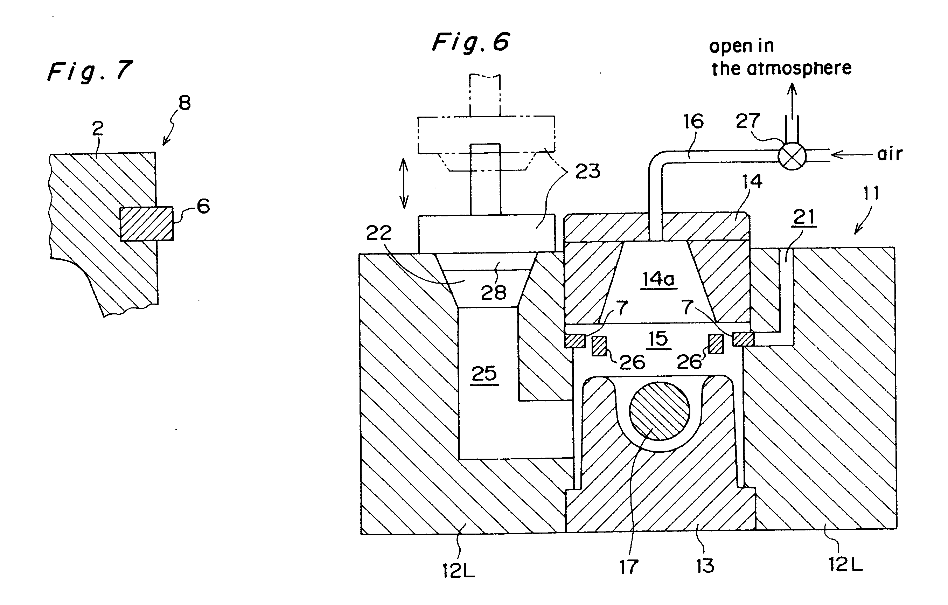

Fig. 6 shows another example of a casting apparatus for piston manufacture. It is a descriptive, sectional view of the mold 11 in a case where application of a pressure by the air is performed through the feeder section 14a provided in the top mold piece 14, similar to Fig. 3. While the air vent groove 24 may be formed in the top mold piece 14 as shown in Fig. 4, in the case of Fig. 6, a valve 27 is provided in the pipe 16 on the way to the compressed air source. The valve 27 is to communicate selectively the feeder section 14a with a compressed air source or the atmospheric air

In this case, a molten metal of aluminum alloy is poured from the sprue in a state where the feeder section 14a is open in the atmosphere through the valve 27. Thereafter, the cover 23 having a cooling mechanism such as a water-cooled copper block 28 is lowered to close the sprue 22. And, simultaneous to this the valve 27 is operated to communicate the pipe 16 with the compressed air source and the factory air has to be supplied onto the mold 11 from the pipe 16 to pressurize the molten metal. In the case of the construction of Fig. 6, the neighboring spaces of a section in which a composite is formed can be effectively pressurized.

According to the above procedure, as shown in Fig. 7, obtained is an aluminum alloy cast product 8 including a ring composite section 6 as a part of the piston main body 2. The ring composite section 6 is obtained by filling pores in the composite forming material ring 7 made from a metal porous preform with an aluminum alloy, as explained in detail after.

In such a way, a so-called gas pressure casting process is employed in this embodiment. In the gas pressure casting process, the sprue is closed after molten metal pouring is completed, the molten metal in the mold is pressurized by a gas pressure and thereby, pores (or void spaces) in the composite forming material ring core 7 as a preform is filled with the molten metal. Therefore, the following problems in the prior art high pressure casting process can be avoided and in addition to this, pores (void spaces) in a preform can be filled with the molten metal simply and surely under a low pressure, which problems are:
1. since a pressurizing mechanism and a strong mold clamping mechanism for applying a high pressure are required, the casting facility becomes to be large in scale and highly expensive;
2. since a molten metal is apt to be infiltrated into a core at least partially and the core itself is apt to be deformed or broken by applying a high pressure, it is required to ensure a sufficient strength of the core and particularly, there is difficulty in actual use of a disintegrable core (for example, a salt core and a sand core) for this case; and
3. since a metal mold itself is necessary to endure a high pressure and a mold construction also has many constraints, a freedom in shape of a product is low, in other words this process is not suited for manufacture of a product of a complex shape or a large size.

Then, the aluminum alloy casting 8 is placed into a heating furnace to heat at 500°C for 4.5 hr; thereby, a solution treatment is given to an aluminum alloy base material and subsequent to this, water quenching is performed, followed by an annealing treatment at 180°C for 5 hr.

Cutting is performed on the aluminum alloy cast greenbody 8 having been subjected to such a T6 treatment not only to machine the outer surfaces of the ring composite section 6 and the piston main body 2 but also to form the top ring groove 3 in the ring composite reinforcement section 6, the secondary ring groove 4 and the oil ring groove 5 as shown in Fig. 1.

It is to be noted that, as apparent from the above description, in manufacture of a piston, a considerable depth in the outer surface region of the ring composite section 6 is, after casting, removed by cutting. The removed portion of the outer surface region does not have any risk to give an adverse influence on a quality of the section 6, even if a filling state of the aluminum alloy in the removed portion is somewhat incomplete. Therefore, an applied pressure of a gas may be set to a lower value by a certain degree.

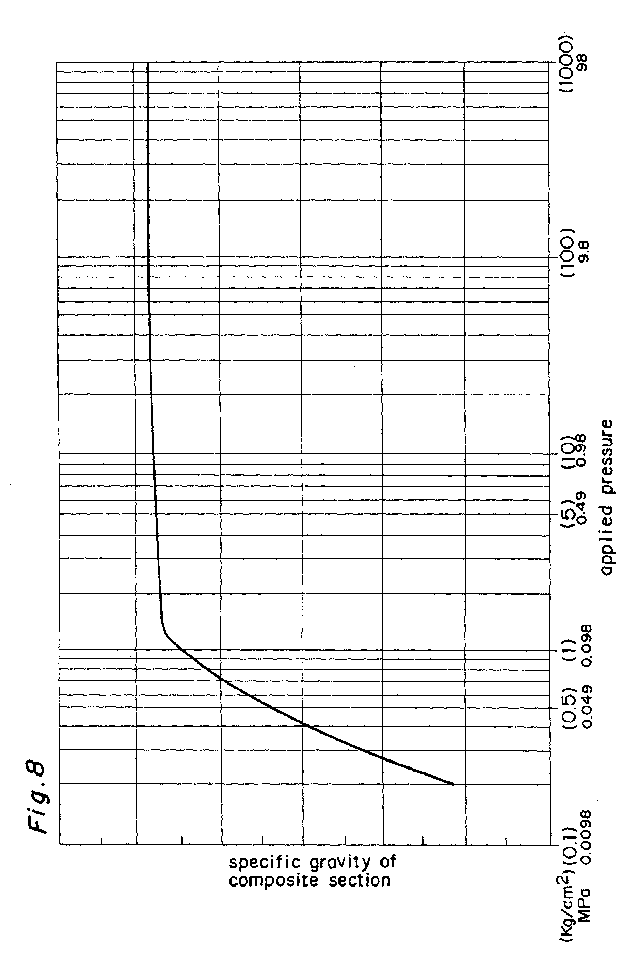

In the embodiment described above, after the molten aluminum alloy is poured from the sprue 22, the cover 23 is lowered to close the sprue 22 airtight. And simultaneous to this, a factory air having a pressure of the order of 0.49 MPa is supplied through the pipe 16 mounted to the cover 23 or the feeder section 14a to pressurize the molten metal. However, as apparently seen from Fig. 8 showing a relationship of a specific gravity of the composite section with an applied pressure, when an applied pressure is 0.098 MPa or higher, a specific gravity of the composite section stays constant. This means that pores of the composite forming material core ring 7 is sufficiently filled with an aluminum alloy by the above-mentioned pressure.

In addition, although an applied pressure lower than 0.049 MPa is hard to achieve sufficient formation of a composite, an applied pressure of 0.049 MPa or higher is sufficient to achieve a composite to satisfaction. However, an applied pressure exceeding 2.94 MPa unpreferably requires a large mold clamping force in order to prevent blowing-off of the molten metal from the interface of a split mold; so an applied pressure is preferably set to 2.94 MPa or lower. Especially, an applied pressure 0.98 MPa or lower can prevent the molten metal blowing-off from occurring even if the mold clamping force is not so large; therefore, an applied pressure is most preferably set in the range of 0.049 to 0.98 MPa.

A preferable range of volume ratios of the composite forming material is suitably from 5 to 20 vol. % on the average, e.g., from 80 to 95 % in void ratio (porosity) while altering according to conditions including kind of the composite forming material, preheating temperature, molten metal temperature and others.

Preferable volume ratios of a composite forming material in an applied pressure range of 0.049 to 2.94 MPa generally fall in the following ranges according to a kind of composite forming material:

| (kind of composite forming material) | (preferable range of volume ratio) |
|---|---|
| · metal porous body, metal fibers | to 20 % |
| · inorganic short fibers, whiskers | to 10 % |
| · inorganic particles | to 15 % |

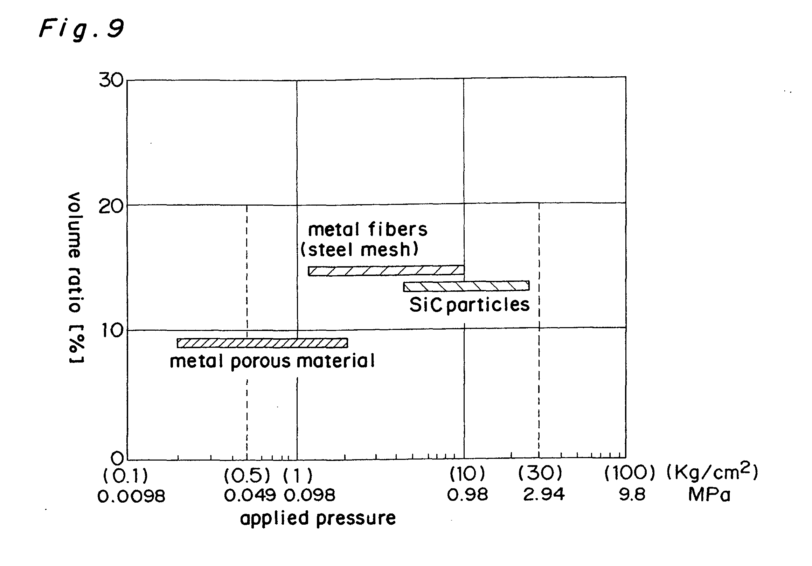

Fig. 9 is a graph showing a relationship between an applied pressure and a volume ratio of a composite forming material. This graph shows, for example, that in a case of a metal porous material of the order of 9 % in volume ratio, composite formation is possible under an applied pressure of the order of 0.0196 MPa, and a sound composite material is obtained under an applied pressure of the order of 0.196 MPa.

It is to be noted that in Figs. 8 and 9, while an applied pressure represented on the abscissa is plotted using two unit systems ([MPa] and [kg/cm²]), the scale thereon are graduated with logarithmic spacing in the [kg/cm²] unit.

Next, description will be given of the composite forming material core ring 7 for partial reinforcement of the top ring groove 3 of the piston (composite member) 1.

In the embodiment, a metal porous preform having a prescribed porosity is employed as the composite forming material core ring 7. And, the material of the preform is a metal material prepared such that iron (Fe) or an iron-based metal is used as a base and chromium (Cr) is included as an additive.

In such a way, since the base of the composite forming material core ring 7 (metal porous preform) is iron or an iron-based metal, it is low in cost and it is prevented by the addition of chromium that the preform is oxidized by a time lag from the completion of molten metal pouring till the molten metal impregnation, while facilitating formability. That is, it is possible that not only are reduction in material cost and improvement of formability achieved, but also adhesiveness between a casting material and a preform in a composite forming section is ensured and a desired wear resistance is attained.

Furthermore, in the embodiment, a chromium content is set to be in the range of 10 to 40 wt %.

The reason why the upper limit of a chromium content is set to be 40 wt % is that the Fe-Cr based metal of a chromium content over this limit is hard to ensure a desired wear resistance as a composite section. As well known, when a chromium content exceeds this limit in a Fe-Cr based metal, the δ phase as an intermetallic compound is precipitated in the material structure and thereby such a material structure fall to be fragile; therefore, the Fe-Cr based metal of a chromium content over this limit is hard to ensure a desired wear resistance as a composite section.

On the other hand, the reason why the lower limit of a chromium content is set to be 10 wt % is that as described later, heat resistance (oxidation resistance) of the order of about 700°C is required for the preform in order to ensure a wear resistance equal to or higher than a prior art metal porous preform prepared by electroplating on nickel base during a casting operation, and to satisfy this requirement, a chromium content of 10 wt % or higher is necessary.

In manufacture of the preform, there have been available various processes and in the embodiment, a powder sintering process was more preferably employed. Besides, processes for addition of chromium are conceived in various ways and in the embodiment, preferably adopted was a process in which Cr powder is blended into Fe powder and thus prepared mixed powder is added or a process in which chromium is diffused into a porous body by a so-called chromizing treatment.

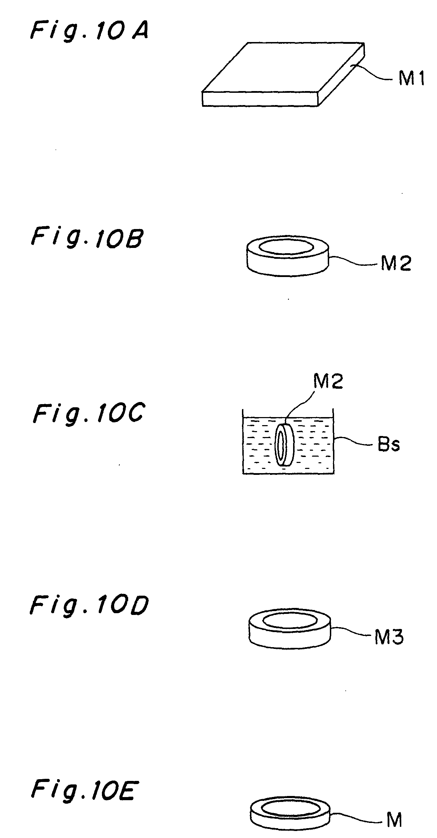

Figs. 10A-10E show an outline of basic steps of the powder sintering process for a preform adopted in the embodiment. As shown in the descriptive, pictorial representations of the series of steps, an foamed urethane sheet M1 of a prescribed thickness is subjected to punching to prepare an urethane foam ring member M2 and the ring member M2 is immersed in a metal powder slurry stored in a slurry bath Bs.

The slurry is obtained by mixing metal powder, water and water-soluble phenol resin in respective prescribed amounts, together with a dispersant (surfactant) and the urethane foam ring member M2 is immersed in the slurry bath Bs, thereby enabling coating a structural framework of urethane resin with metal powder.

After the metal powder coating step in the slurry bath Bs is finished, burning of the urethane resin is performed under predetermined condition, followed by sintering of the metal powder under predetermined condition; thus a metal porous ring M3 is obtained. The urethane burning and metal powder sintering steps are performed under temperature conditions of, for example, a heating temperature of 800°C x a holding time of 10 min - a heating temperature of 1100°C x a holding time of 30 min, both in a non-oxidizing atmosphere.

By press molding thus obtained metal porous ring M 3, obtained is a metal porous preform M of a prescribed size (that is, a prescribed volume ratio) having a ring-like shape.

In the above-described series of steps, addition of chromium (Cr) proceeds in this way. That is, in a case where Cr powder and Fe powder (or in addition to the powders, another kind of metal powder according to a kind of alloy) are mixed to form mixed powder and Cr is added as the mixed powder, the metal mixed powder is suspended in the slurry liquid of the coating step (see Fig. 10C) such that weights of the metal powders are adjusted so as to show a prescribed ratio in weight.

On the other hand, in a case where Cr is diffused into the porous body through the so-called chromizing treatment, the ring preform M is prepared by means of the powder sintering process and thereafter, the chromizing treatment is applied on the ring preform M. A diffusing agent and treatment conditions in the chromizing treatment were as follows:
· diffusing agent: chromium + ammonium chloride + alumina
· diffusion conditions: 900°C x 4 hr (note that in a case of Ni, 1300°C x 4 hr)

It is to be noted that in order to improve wear resistance of a partial reinforcement composite, it is generally required that a base material low in wear resistance (in the embodiment, an aluminum alloy) is dispersed in as narrow an area as possible. It is recommended to increase a volume ratio of a reinforcement material in order to decrease of an absolute value of the area. However, in this case, some problems arise since an infiltrating property of a molten metal is deteriorated to inhibit satisfactory formation of a composite and furthermore, an amount of a reinforcement material in use increases to be costly. Accordingly, it is preferable that increase in volume ratio of the reinforcement material is avoided to the lowest level possible.

For this reason, it is conceived that cell (or a void space) sizes of a porous material is minimized to finely disperse an aluminum base material in the porous body. In this case, in an electroplating process, the minimization of cell sizes of the porous material can be achieved with smaller cell sizes of a urethane foam as a substrate for the porous body. However, in the sintering process, a problem has occurred since a metal slurry is coated on a urethane foam, clogging of the slurry arises, inviting deterioration in formability of a composite with extremely small cell sizes of the urethane foam.

In the embodiment, the following setting scheme was adopted with respect to a cell size and a volume ratio of a porous material in light of the above-described problems:

First of all, a urethane foam of coarser cell sizes than a target cell size is prepared and a solid unit-volume weight of a slurry is set to a value lower than a target value. Thereby, a clogging-less metal porous body with a volume ratio lower than a target value can be obtained. Furthermore, a large compressibility is set on thus obtained metal porous body and sizing is conducted, for example, by press molding to obtain a final shape. Thereby, a metal porous preform having a target cell size and a target volume ratio was able to be obtained successfully.

To be concrete, a urethane foam having cell sizes in the range of 37 to 43 cells/inch was adopted and a solid unit-volume weight of the slurry was set such that a volume ratio after sintering is of the order of 7 %. Furthermore, a compressibility of thus obtained metal porous body was set to 30 % to perform sizing and attain a final shape. As a result, there could be obtained a preform having cell sizes in the range of 53 to 60 cells/inch and a volume ratio of about 10 %.

Note that as a material of a preform, there were used, for example, Fe-13Cr, Fe-26Cr and Fe-18Cr-8Ni.

Next, comparative tests to compare wear resistance properties of various kinds of samples with each other were conducted in order to confirm an effect of improving wear resistance of a metal porous preform relating to the embodiment.

Description will be given of the comparative tests below: First of all, test samples were adopted that were made from the following materials by means of the following manufacturing processes, wherein the samples were of aluminum base material, two kinds of comparative examples and four kinds of examples of the present invention. The samples are detailed:
1) An aluminum base material (AC8A base metal/Hv = 145): An aluminum alloy AC8A base material, not reinforced in a composite structure, in its original state having a Vickers hardness (Hv) of 145 was used, and
2) Comparative Example 1 (Ni-30Cr alloy/an electroplating process/ Hv = 180): A Ni porous sheet was prepared by means of an electroplating process and thus obtained Ni porous sheet was treated in chromizing to diffuse chromium thereinto to prepare a Ni-30Cr porous sheet. Thus obtained Ni-30Cr sheet was cut into short strips and each strip is rolled into a porous ring. A porous ring of Ni-30Cr was set inside a mold and casting was performed as described above using a molten metal of aluminum alloy AC8A by means of the gas pressure casting process. Conditions for the gas pressure casting process were a molten metal temperature of 780°C and an applied pressure of 0.4 MPa.
   By performing the-above casting process, manufactured was a piston whose top ring groove was partially reinforced with the Ni-30Cr porous ring. In this case, a volume ratio of the reinforcement material was about 8 %. Besides, a Vickers hardness (Hv) of the reinforcement material was 180.
3) Comparative Example 2 (Fe-C/a powder sintering process/Hv = 700): A Fe-C porous ring (C:0.8 wt %) was prepared by means of the sintering process using Fe-C mixed powder. This ring was used to perform casting like the case of Comparative Example 1 and obtain a piston having a partial composite reinforcement section. Note that a Vickers hardness (Hv) of the reinforcement material was 700.
4) Example 1 of the present invention (Fe-13Cr/a powder sintering process + chromizing/Hv = 81): A Fe porous ring was prepared by means of the sintering process using Fe powder. A chromizing treatment was applied on the Fe porous ring to diffuse Cr into the porous body and obtain a porous ring of Fe-13Cr. Casting was performed using this ring by means of the above-mentioned gas pressure casting process to attain a piston having a partial composite reinforcement section. Note that a Vickers hardness (Hv) of the reinforcement material was 81.
   In such a way, by manufacturing a metal porous preform (Fe porous ring) by means of the sintering process, molding of a preform can be simply conducted as compared with a electroplating process having been generally adopted in the prior art.
5) Example 2 of the present invention (Fe-26Cr/a powder sintering process + chromizing/Hv = 185): A Fe-26Cr porous ring was obtained in the same process as above described Example 1 of the present invention except that only an amount of Cr diffusion was altered in the chromizing treatment. Note that a Vickers hardness of the reinforcement material was 185.
   In such a way, by performing addition of Cr to a metal porous preform by means of a chromizing treatment, Cr diffusion into a base (Fe-base metal) can be achieved with simplicity and ease.
6) Example 3 of the present invention (Fe-12Cr/a powder sintering process/Hv = 380): Fe powder and Cr powder were mixed so as to show a weight ratio of Fe-12Cr and a porous ring of Fe-12Cr was prepared by means of the sintering process using the mixed powder. Casting was conducted using this ring by means of the above described gas pressure casting process to attain a piston having a partial composite reinforcement section. Note that a Vickers hardness (Hv) of the reinforcement material was 380.
7) Example 4 of the present invention (Fe-18Cr-8Ni/a powder sintering process/Hv = 266): Fe powder and Cr powder were mixed so as to show a weight ratio of Fe-18Cr-8Ni and a porous ring of Fe-18Cr-8Ni was prepared by means of the sintering process using the mixed powder. Casting was conducted using this ring by means of the above described gas pressure casting process to attain a piston having a partial composite reinforcement section. Note that a Vickers hardness (Hv) of the reinforcement material was 266.

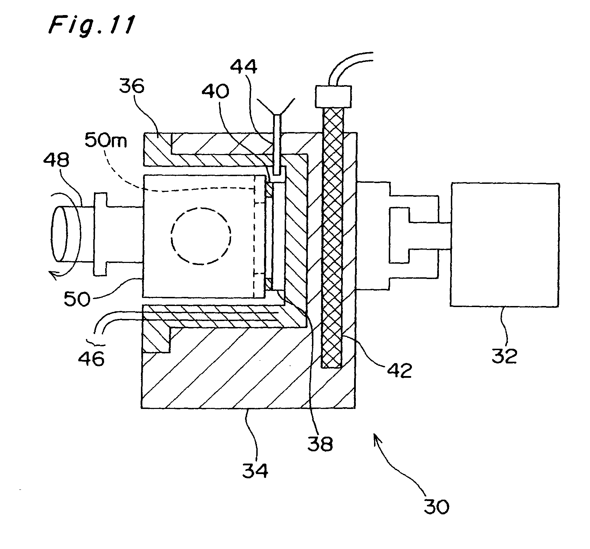

Wear tests were performed on each of the above-described samples and a wear resistance was evaluated on each of the samples. Fig. 11 is a descriptive view schematically showing a construction of a wear tester used in the tests.

As shown in Fig. 11, the tester 30 includes: a hydraulic cylinder 32; a cylinder holder 34 connected to the cylinder; and a cylinder liner 36 having a vertical section of approximately a Greek letter Π provided inside the cylinder 34.

A test piston ring 40 is fixed on a flat protrusion 38 provided at the bottom of the cylinder liner 36. A heater 42 is embedded in the cylinder holder 34.

The cylinder holder 34 is driven by the hydraulic cylinder 32 and reciprocated by a prescribed distance in a prescribed cycle.

A piston 50 as a test sample is accommodated in a cavity of the cylinder liner 36. The top of each piston (test sample) 50 is removed by machining to expose a composite reinforcement section 50m formed as a composite including the above described preform at an end surface of the piston 50. Therefore, the composite reinforcement section 50m faces the piston ring 40 fixed on the cylinder holder 34 side. Note that a distal end of an oil supply pipe 44 supplying lubricant oil is located in the vicinity of the outer periphery of the piston ring 40.

The piston 50 is fixed onto a rotary shaft 48 driven by a motor (not shown) at the end of the other side thereof from the composite reinforcement section 50m and rotated at a prescribed rotation speed.

In the above construction, the piston 50 is rotated by the rotary shaft 48 driven by the motor (not shown), and the hydraulic cylinder 32 is also driven. Thereby, the piston ring 40 is pressed in a prescribed cycle to the composite reinforcement section 50m of the piston 50 in rotation at a prescribed rotation speed. That is, a pressure is acted in a prescribed cycle according to an applied pressure of the hydraulic cylinder 32 over the interface between the composite reinforcement section 50m and the piston ring 40 under a condition of a prescribed relative speed (sliding speed).

In the tests, each of the test was conducted for a prescribed time in a state where a temperature of the cylinder holder 34 was kept constant by the heater 42. Amount of wear was measured on the composite reinforcement section 50m after an operation of the tester was finished, and a wear resistance of each preform was evaluated.

In the embodiment, test conditions were set as follows:
· sliding speed: 0.08 m/s
· frequency of pressure application: 20 Hz
· pressure over the interface: 6 MPa
· temperature: 250°C
· test operation time: 3 hr

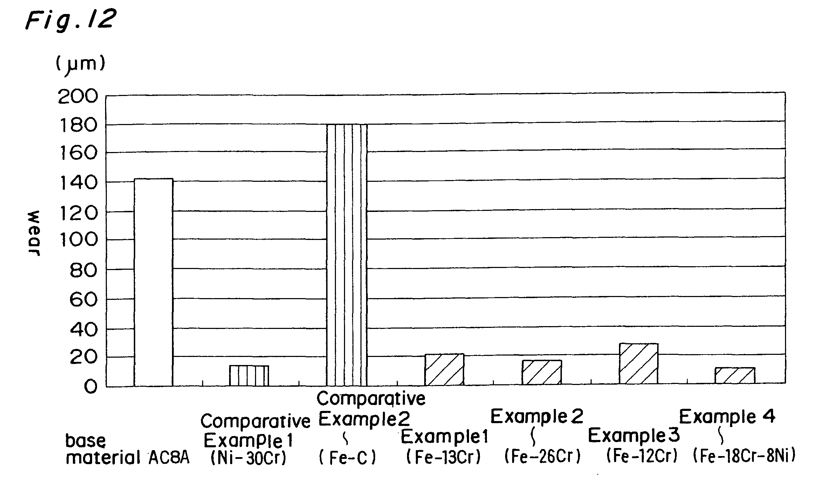

Test results were as shown in the graph of Fig. 12. That is, in a case where a preform which is simply Fe-based (Fe-C) material was employed as a base material (Comparative Example 2), since the preform is very hard, but is fragile, a so-called aggressive wear is intense and much of a wear is experienced. In contrast to this, in cases where preforms made from Fe-based metal added with Cr at a content of 10 wt % or higher (to be concrete, 12 wt % or higher) were employed (Examples 1 to 4 of the present invention), wear resistances in all of the cases were found to be equal to or higher than in a case where a prior art preform obtained by electroplating on a Ni base material (Comparative Example 1) was employed.

This is conceived because in Examples 1 to 4, oxidation of a preform caused by a time lag from completion of molten metal pouring till impregnation of a molten metal in the gas pressure casting process is prevented by addition of Cr.

It is to be noted that when a Cr additive amount exceeds 40 wt %, an intermetallic compound is precipitated in the material structure; therefore, it is as described above that a Cr content should be limited to the value or lower.

As described above, according to the embodiment, since a base of a metal porous preform is a Fe-based metal, the preform is low in cost. And it is prevented by the addition of chromium that the preform is oxidized by a time lag from the completion of molten metal pouring till the molten metal impregnation in the gas pressure casting process, while facilitating formability. That is, it is possible that not only are reduction in material cost and improvement of formability achieved, but also adhesiveness between a casting material and a preform in a composite reinforcement section is ensured, and a desired wear resistance is attained. Particularly, by setting a Cr content in the range of 10 to 40 wt %, there can be ensured a wear resistance equal to or higher than a preform prepared by means of an electroplating on a nickel (Ni) base having been generally adopted in the prior art.

In the above described embodiment, the gas pressure casting process is adopted in manufacture of a composite member (piston) using a metal porous preform. However, it is to be noted that the present invention is not limited to such a casting process, but any of other casting processes can be adopted instead, as long as a prescribed time lag exists between completion of molten metal pouring till impregnation of a molten metal.

Furthermore, a composite member manufactured by means of a process of the present invention is not limited to a piston of an automotive engine as described above. Needless to say, it can be applied to other engine parts such as a bearing cap and a connecting rod or, besides, parts of other kinds as well. Still furthermore, in addition to the aluminum alloy casting, a composite member made from other kinds of light alloy cast, for example made from magnesium alloy cast can be manufactured according to the present invention.

## Claims

1. A metal porous preform (7, M) adopted in a casting process having a prescribed time lag from completion of pouring of a molten metal till impregnation of the molten metal when the metal porous preform set inside a mold (11) is impregnated with the molten metal, **characterized by** that the metal porous preform (7, M) is made from iron or an iron-based metal as a base material, including chromium.

2. The metal porous preform (7, M) according to claim 1, **characterized by** that a chromium content is in the range of 10 to 40 wt %.

3. A manufacturing process for a metal composite member (1) including a casting process having a prescribed time lag from completion of pouring of a molten metal till impregnation of the molten metal when a metal porous preform (7, M) set inside a mold (11) is impregnated with the molten metal, comprising the steps of:
forming the metal porous preform (7, M), made from iron or an iron-based metal as a base material, and including chromium;
setting the metal porous preform inside a mold (11) at a prescribed position; and
thereafter, pouring the molten metal into the mold to impregnate the metal porous preform with the molten metal under pressure,
whereby a composite section (6) is formed in which a casting material and the preform are included.

4. The manufacturing process for a metal composite member (1) according to claim 3, **characterized by** that pores in the preform (7, M) are filled with the molten metal by pressurizing the molten metal in the mold (11) with a gas pressure after pouring of the molten metal is completed and a sprue (22) of the mold is closed, in the casting process.

5. The manufacturing process for a metal composite member (1) according to claim 3 or 4, **characterized by** that the metal porous preform (7, M) is manufactured by means of a sintering process.

6. The manufacturing process for a metal composite member (1) according to claim 3, 4 or 5, **characterized by** that addition of chromium is performed by means of a chromizing treatment.
